# EUROPEAN PATENT APPLICATION

(11) **EP 4 534 580 A1**
(43) Date of publication of application: **09.04.2025**
(21) Application number: 23202127.9
(22) Date of filing: 06.10.2023
(51) Int. Cl.: C08G 59/40

(54) **HEAT-CURING EPOXY RESIN COMPOSITION SUITABLE FOR LOW CURING TEMPERATURE WITH GOOD OPEN TIME AND CORROSION RESISTANCE**

(71) Applicant: Sika Technology AG, 6340 Baar (CH)
(72) Inventor: GABERELL, Fabio, 6003 Luzern (CH); HALTINER, Sara, 8952 Schlieren (CH); LEMPEREUR, Juliette, Dietikon 8953 (CH)
(74) Representative: Sika Patent Attorneys

(57) **Abstract**

The present invention relates to thermosetting epoxy resin compositions comprising a liquid epoxy resin A1, a liquid epoxy resin E that is a glycidyl ether of difunctional saturated, branched or unbranched, cyclic or open-chain C₂-C₃₀ alcohols and a dihydrazide curing agent, wherein the weight ratio of the at least one liquid epoxy resin A1 to the at least one liquid epoxy resin E (A1/E) is from 3.0 - 8.5. The compositions feature good mechanical properties, especially lap shear strength and impact peal performance, after shorter curing times at lower temperatures, especially 10 minutes at 140°C and provide sufficient open time stability and corrosion resistance. The epoxy resin compositions are especially suitable for use as bodywork adhesive.

## Description

### Technical field

The invention relates to the field of thermosetting one-component epoxy resin compositions, especially for use as bodywork adhesive.

### Prior art

Thermosetting epoxy resin compositions have long been known. Efforts have already been made for some time to remedy or at least significantly reduce the great disadvantage of epoxy resin compositions, namely their brittleness, the effect of which is that the cured epoxy resin composition cracks or is destroyed under impact stress. Attempts have already been made to do this by the addition of impact modifiers or by chemical modification of epoxy resins.

An important field of use of thermosetting epoxy resin compositions is in motor vehicle construction, especially in bonding in the bodywork. After the application of the epoxy resin composition, the bodywork is heated in the cathodic electrocoating oven, because of which the thermosetting epoxy resin composition is cured.

However, efforts are currently under way in the market to lower the temperature of the cathodic electrocoating ovens. Thus, there is a great need on the market for thermosetting epoxy resin compositions containing impact modifiers that cure even at relatively low temperatures, i.e. at a temperature of 130 to 140°C, even after a short time, typically 10 to 15 minutes. Further, said thermosetting epoxy resin compositions should also provide sufficient open time in the uncured state especially if exposed to storage temperatures around 50 °C in high humidity that can occur during shipping or storage in hot climate. In addition, said compositions should also display a sufficient resistance to corrosion. There is therefore a need for toughened thermosetting one-component epoxy resin compositions which on the one hand cure at lower temperatures but on the other hand provide sufficient open time stability and corrosion resistance.

### Summary of the invention

It is therefore an object of the present invention to provide storage stable toughened thermosetting one-component epoxy resin compositions that have sufficient mechanical properties, especially lap shear strength and impact peal performance, after shorter curing times at lower temperatures, especially 10 minutes at 140°C and provide sufficient open time stability and corrosion resistance.

This object was surprisingly achieved by a thermosetting one-component epoxy resin composition as claimed in claim 1. This epoxy resin composition has particularly good usability as a one-component thermosetting adhesive, especially as a thermosetting one-component bodywork adhesive in motor vehicle construction.

### Ways of executing the invention

The present invention relates to thermosetting one-component epoxy resin compositions comprising:
a) 10 - 60 % by weight, preferably 20 - 50 % by weight, more preferably 25 - 35 % by weight, based on the total weight of the thermosetting one-component epoxy resin composition, of at least one liquid epoxy resin **A1** having an average of more than one epoxy group per molecule;
b) 0 - 10 % by weight, preferably 0 - 5 % by weight, more preferably 0 - 2 % by weight, based on the total weight of the thermosetting one-component epoxy resin composition at least one solid epoxy resin **A2** having an average of more than one epoxy group per molecule;
c) at least one liquid epoxy resin **E** having an average of more than one epoxy group per molecule, that is a glycidyl ether of difunctional saturated, branched or unbranched, cyclic or open-chain C₂-C₃₀ alcohols;
d) at least one curing agent **B** for epoxy resins, where the curing agent **B** is a dihydrazide, preferably selected from the group consisting of aromatic dicarboxylic dihydrazide **B1** and aliphatic dicarboxylic dihydrazide **B2;** and
e) preferably at least one at least one toughness improver **D,** preferably selected from the group consisting of terminally blocked polyurethane polymers **D1** and liquid rubbers **D2,** preferably a terminally blocked polyurethane polymer **D1.**

The weight ratio of the at least one liquid epoxy resin **A1** to the at least one liquid epoxy resin **E (A1/E)** is from 3.0 - 8.5 and the at least one liquid epoxy resin **A1** is different from the at least one liquid epoxy resin **E.**

In this document, the use of the term "independently" in connection with substituents, radicals or groups should be interpreted such that the substituents, radicals or groups having the same designation in the same molecule may occur simultaneously with different meanings.

The prefix "poly" in substance names such as "polyol", "polyisocyanate", "polyether" or "polyamine" in the present document indicates that the respective substance, in a formal sense, contains more than one of the functional groups that occur in its name per molecule.

In the present document, "molecular weight" is understood to mean the molar mass (in grams per mole) of a molecule. "Average molecular weight" is understood to mean the number-average molecular weight Mₙ of an oligomeric or polymeric mixture of molecules, which is typically determined by means of GPC against polystyrene as standard.

A "primary hydroxyl group" refers to an OH group bonded to a carbon atom having two hydrogens.

In the present document, the term "primary amino group" refers to an NH₂ group bonded to one organic radical, while the term "secondary amino group" refers to an NH group bonded to two organic radicals which may also together be part of a ring. Accordingly, an amine having one primary amino group is referred to as "primary amine", one having a secondary amino group correspondingly as "secondary amine", and one having a tertiary amino group as "tertiary amine".

In the present document, "room temperature" refers to a temperature of 23°C.

The thermosetting one-component epoxy resin composition comprises a) 10 - 60 % by weight, preferably 20 - 50 % by weight, more preferably 25 - 35 % by weight, based on the total weight of the thermosetting one-component epoxy resin composition, of at least one liquid epoxy resin **A1** having an average of more than one epoxy group per molecule.

Preferred liquid epoxy resins **A1** have the formula (II)

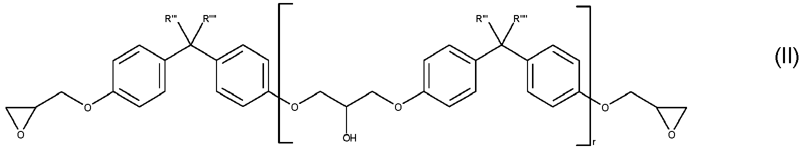

In this formula, the substituents R‴ and R"" are each independently H or CH₃. In addition, the index r has a value of 0 to 1. Preferably, r has a value of less than 0.2.

These are thus preferably diglycidyl ethers of bisphenol A (DGEBA), of bisphenol F and of bisphenol A/F (here, the designation "A/F" refers to a mixture of acetone with formaldehyde which is used as the reactant in the preparation thereof). Such liquid resins are available, for example, as Araldite^{®} GY 250, Araldite^{®} PY 304, Araldite^{®} GY 282 (Huntsman), or D.E.R.^{™} 331, or D.E.R.^{™} 330 (Olin), or Epikote 828 (Hexion).

Moreover, so-called novolacs are suitable epoxy resins **A1.** These have in particular the following formula: 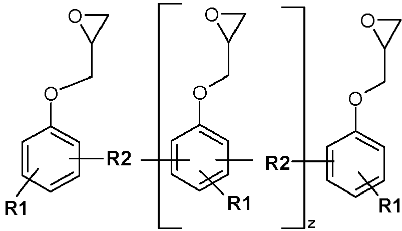 with **R2=** 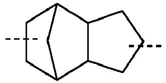 or CH₂, **R1** = H or methyl and z = 0 to 7.

In particular, they are phenol or cresol novolacs **(R2** = CH₂).

Such epoxy resins are commercially available under the trade names EPN or ECN as well as Tactix^{®} 556 from Huntsman or under the product line D.E.N.^{™} from Dow Chemical.

Particular preference is given to bisphenol A diglycidyl ether, bisphenol F diglycidyl ether or bisphenol A / F diglycidyl ether, in particular Araldite^{®} GY 240, Aralite^{®} GY 250, Araldite^{®} GY 281, Araldite^{®} GY 282, Araldite^{®} GY 285, Araldite^{®} PY 304 or Araldite^{®} PY 720 (all from Huntsman), or D.E.R.^{®} 330, D.E.R.^{®} 331, D.E.R.^{®} 332, D.E.R.^{®} 336, D.E.R.^{®} 351, D.E.R.^{®} 352, D.E.R.^{®} 354 or D.E.R.^{®} 356 (all from Olin), or novolak glycidyl ether.

Preferred is a novolak glycidyl ether that is derived from phenol-formaldehyde novolaks, which are also referred to as epoxy phenol novolac resins.

Such novolac glycidyl ethers are commercially available, for example from Olin, Huntsman, Momentive or Emerald Performance Materials. Preferred types are D.E.N.^{®} 431, D.E.N.^{®} 438 or D.E.N.^{®} 439 (from Olin), Araldite^{®} EPN 1179, Araldite^{®} EPN 1180, Araldite^{®} EPN 1182 or Araldite^{®} EPN 1183 (from Huntsman), Epon^{®} 154, Epon^{®} 160 or Epon^{®} 161 (from Momentive) or Epalloy^{®} 8250, Epalloy^{®} 8330 or Epalloy^{®} 8350 (from Emerald Performance Materials).

More preferably, the liquid epoxy resin **A1** is a liquid epoxy resin of the formula (II).

The thermosetting one-component epoxy resin composition comprises b) 0 - 10 % by weight, preferably 0 - 5 % by weight, more preferably 0 - 2 % by weight, based on the total weight of the thermosetting one-component epoxy resin composition at least one solid epoxy resin **A2** having an average of more than one epoxy group per molecule.

Preferred solid epoxy resins have the formula (I)

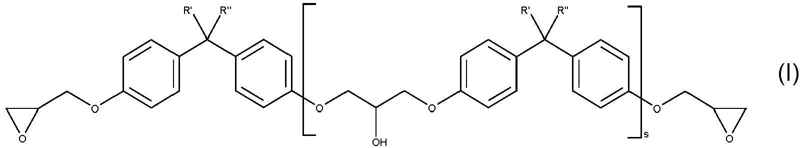

The substituents R' and R" here are independently either H or CH₃ and the index s has a value of > 1.5, especially of 2 to 12.

Such solid epoxy resins are commercially available, for example from Dow or Huntsman or Hexion.

The thermosetting one-component epoxy resin composition comprises c) at least one liquid epoxy resin **E** having an average of more than one epoxy group per molecule, that is a glycidyl ether of difunctional saturated, branched or unbranched, cyclic or open-chain C₂-C₃₀ alcohols.

It was surprisingly found that the use of liquid epoxy resins **E** leads to a significant reduction in the viscosity of the compositions however maintaining comparable values in lap shear strength, impact peel values and E-modulus and corrosion susceptibility as well as tensile shear values after application and leaving the material uncured at room temperature for 8 weeks before heat curing. The reduction in viscosity allows for an easily application of the thermosetting one-component epoxy resin composition in the form of beads at room temperature. In contrast, the use of comparable amounts of other epoxy group containing compounds like Flexibilizer DY 965, Epilox 19-34/700 or Polypox R7 (D.E.R. 727) lead to a significant reduction in lap shear strength and E-modulus values. This can be seen, for example, in the comparison of table 2 and table 4 with table 6.

Preferably, the total amount of the at least one liquid epoxy resin **E** is 4.5 - 12.5 % by weight, preferably 6.5 - 10.5 % by weight, more preferably 7.5 - 9.5 % by weight, based on the total weight of the thermosetting one-component epoxy resin composition.

Preferably, the liquid epoxy resin **E** is selected from the group consisting of butanediol diglycidyl ether, hexanediol diglycidyl ether, octanediol diglycidyl ether, cyclohexane dimethanol diglycidyl ether and neopentyl glycol diglycidyl ether.

More preferably, the liquid epoxy resin **E** is selected from the group consisting of butanediol diglycidyl ether and hexanediol diglycidyl ether, most preferably the liquid epoxy resin **E** is hexanediol diglycidyl ether.

The comparison of butanediol diglycidyl ether and hexanediol diglycidyl ether in table 2 and table 4 shows that butanediol diglycidyl ether obtained higher lap shear strength compared to hexanediol diglycidyl ether. This is shown in the comparison of E1 with E2 and the comparison of E3 with E4.

The comparison of butanediol diglycidyl ether with hexanediol diglycidyl ether in table 2, using substituted ureas, shows that hexanediol diglycidyl ether achieves significant lower decrease in tensile shear values after application and leaving the material uncured at room temperature (23 °C, 80% r.H.) for 8 weeks before heat curing.

The weight ratio of the at least one liquid epoxy resin **A1** to the at least one liquid epoxy resin **E (A1/E)** is from 3.0 - 8.5. This ratio leads to a comparable value in lap shear strength, impact peel values and E-modulus as well as corrosion susceptibility and tensile shear values after application and leaving the material uncured at room temperature for 8 weeks before heat curing. This can be seen, for example, in table 2 in the comparison of E1 with Ref1-Ref3 and E2 with Ref1, Ref4 and Ref5. This is shown in table 4 in the comparison of E3 with Ref7 and E4 with Ref8 as well.

Preferably, the weight ratio of the at least one liquid epoxy resin **A1** to the at least one liquid epoxy resin **E (A1/E)** is from 3.5 - 7.5, more preferably 4.0 - 6.5. Said preferred ranges significantly reduce corrosion susceptibility and increase tensile shear values after application and leaving the material uncured at room temperature for 8 weeks before heat curing.

It is further preferred if in the thermosetting one-component epoxy resin composition the proportion of the sum of the liquid epoxy resins **A1** and **E** is 30 - 60 % by weight, preferably 35 - 55 % by weight, more preferably 40 - 50 % by weight, based on the total weight of the one-component epoxy resin composition.

The composition of the invention also contains at least one curing agent **B** for epoxy resins. The curing agent **B** is a dihydrazide, which is preferably selected from the group consisting of aromatic dicarboxylic dihydrazide **B1** and aliphatic dicarboxylic dihydrazide **B2.**

If the curing agent **B** is an aromatic dicarboxylic dihydrazide **B1,** it is preferably selected from the group consisting of isophthalic dihydrazide and/or terephthalic dihydrazide, more preferably isophthalic dihydrazide.

Suitable dihydrazides are commercially available, for example, from Otsuka Chemical Co., Ltd under the Ajicure^{®} trade name (from Ajinomoto Fine-TechnoCo., Inc.) and under the Technicure^{®} trade name (from A&C Catalysts).

Preferably, the curing agent **B** is an aliphatic dicarboxylic dihydrazide **B2,** preferably selected from the group consisting of glutaric dihydrazide, adipic dihydrazide, pimelic dihydrazide, 8,12-eicosadienedioic acid 1,20-dihydrazide and 4-isopropyl-2,5-dioxoimidazolidine-1,3-di(propionohydrazide).

Preference is given to adipic dihydrazide, 8,12-eicosadienedioic acid 1,20-dihydrazide (UDH) and 4-isopropyl-2,5-dioxoimidazolidine-1,3-di(propionohydrazide) (VDH). Most preferred is adipic dihydrazide.

Suitable dihydrazides are commercially available, for example, from Otsuka Chemical Co., Ltd under the Ajicure^{®} trade name (from Ajinomoto Fine-TechnoCo., Inc.) and under the Technicure^{®} trade name (from A&C Catalysts)

Preferably, the ratio of the proportion of the sum of the epoxy groups of the liquid epoxy resins **A1** and **E** and the optional solid epoxy resin **A2** in mol / proportion of curing agent **B** in mol **((A1+A2+E)/B)** is 2 - 7, preferably 2.5 - 6, more preferably 3 - 5, most preferably 3.5-4.5. This is advantageous in that, within this range, particularly advantageous values are obtained for mechanical properties, especially lap shear strength and impact peel of the cured composition while the system still provides a good storage stability.

It may further be advantageous when more than 80% by weight, preferably more than 90% by weight, especially more than 95% by weight, especially preferably more than 98% by weight, most preferably more than 99% by weight, based on the total weight of the thermosetting one-component epoxy resin composition, of molecules able to act as curing agents for epoxy resins at temperatures between 100-220°C, are the molecules of the curing agent **B.**

It is further advantageous when the thermosetting one-component epoxy resin composition includes a minimum amount of dicyandiamide. If the epoxy resin composition includes dicyandiamide, the weight ratio of the total amount of curing agent **B** to dicyandiamide (**B**/dicyandiamide) is ≥ 0.5, ≥ 0.75, ≥ 1, ≥ 2, ≥ 5, especially ≥ 10, preferably ≥ 50, more preferably ≥ 100.

The amount of dicyandiamide is preferably less than 5% by weight, less than 3% by weight, less than 2% by weight, especially less than 1% by weight, preferably less than 0.5% by weight, more preferably less than 0.3% by weight, most preferably less than 0.1% by weight, based on the total weight of the epoxy resin composition.

More preferably, the thermosetting one-component epoxy resin composition does not include any dicyandiamide.

Preferably, the thermosetting one-component epoxy resin composition additionally contains at least one accelerator **C** for epoxy resins. This is advantageous especially with respect to curing at lower temperatures.

Preferably, the accelerator **C** for epoxy resins is selected from the list consisting of substituted ureas, imidazoles, imidazolines and blocked amines, preferably imidazoles and substituted ureas, most preferred substituted ureas.

It was surprisingly found that the use of substituted ureas instead of imidazoles leads to a significant increase in lap shear strength and impact peel values as well as less corrosion susceptibility and improved tensile shear values after application and leaving the material uncured at room temperature (23 °C, 80% r.H) for 8 weeks before heat curing. This can be seen, for example, in the comparison of table 2 with table 4, especially in the comparison of E1 and E2 with Ref1 and E3 and E4 with Ref7.

This preferably comprises substituted ureas of the formula (III) 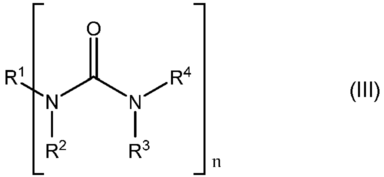 in which R¹ and R² are independently hydrogen atoms or monovalent alkyl radicals which have 1 to 10 carbon atoms and optionally also comprise oxygen atoms, nitrogen atoms and/or aromatic units or together form a divalent alkyl radical having 1 to 10 carbon atoms, and which may additionally comprise oxygen atoms, nitrogen atoms or aromatic units; R³ and R⁴ are independently hydrogen atoms or monovalent alkyl radicals which have 1 to 10 carbon atoms and optionally also comprise oxygen atoms or nitrogen atoms; and the index n has a value of 1 or 2.

The substituted urea of the formula (III) is preferably selected from the group consisting of p-chlorophenyl-N,N-dimethylurea (monuron), 3-phenyl-1,1-dimethylurea (fenuron), 3,4-dichlorophenyl-N,N-dimethylurea (diuron), N-methylurea, N,N-dimethylurea, N,N'-dimethylurea, N,N,N'-trimethylurea, N,N,N',N'-tetramethylurea and derivatives thereof, where some or all methyl groups are instead ethyl groups.

Preferably, R¹ and R² are independently hydrogen atoms or monovalent linear or branched alkyl radicals which have 1 to 10, preferably 1 to 5, more preferably 1 to 4, carbon atoms and optionally together constitute a divalent alkyl radical that forms a ring structure with the adjacent nitrogen atom, and/or R³ and R⁴ independently represent hydrogen atoms or monovalent linear or branched alkyl radicals which have 1 to 10, preferably 1 to 5, more preferably 1 to 4, carbon atoms and optionally together constitute a divalent alkyl radical that forms a ring structure with the adjacent nitrogen atom.

Very particularly preferred substituted ureas of the formula (III) are those in which R¹ and R² in formula (III) are both hydrogen atoms and/or in which R³ and R⁴ are both ethyl or methyl groups, preferably methyl groups.

Further preferred urea derivatives of the formula (III) include those in which R¹, R², R³ and R⁴ in formula (III) all represent ethyl or methyl, preferably methyl groups, or in which R¹, R² and R³ represent ethyl or methyl, preferably methyl, and R⁴ is a hydrogen atom, or where R¹ and R⁴ both represent hydrogen atoms, and R² and R³ both represent ethyl or methyl groups, preferably methyl groups.

Suitable urea derivatives are commercially available, for example, under the Dyhard ^{®} trade name (from AlzChem Group AG), under the Omicure^{®} trade name (from CVC Thermoset Specialties), under the Amicure^{®} trade name (from Evonik) and from Sigma Aldrich.

Preferably, the ratio of the proportion of accelerator **C** in grams per mole of the sum of the epoxy groups of the liquid epoxy resins **A1** and **E** and the optional solid epoxy resin **A2** is preferably 0.01-0.8 g/mol of epoxy groups, especially 0.05-0.6 g/mol of epoxy groups, more preferably 0.075-0.5 g/mol of epoxy groups, most preferably 0.1-0.35 g/mol of epoxy groups.

It is further preferred if the thermosetting one-component epoxy resin composition contains accelerators for epoxy resins other than the before mentioned at least one accelerator **C** in an amount of less than 0.5 % by weight, less than 0.1 % by weight, less than 0.05 % by weight, especially less than 0.01 % by weight, preferably less than 0.001 % by weight, based on the total weight of the epoxy resin composition. More preferably, the thermosetting one-component epoxy resin composition does not include any accelerators for epoxy resins other than the before mentioned at least one accelerator **C.**

Preferably, the one-component thermosetting epoxy resin composition comprises at least one toughness improver **D.** The toughness improvers **D** may be solid or liquid, preferably liquid.

The toughness improver **D** is preferably selected from the group consisting of terminally blocked polyurethane polymers **D1** and liquid rubbers **D2.** Particular preference is given to a terminally blocked polyurethane polymer **D1.**

It is preferably a terminally blocked polyurethane polymer **D1** blocked with a blocking group that is eliminated at a temperature above 100°C.

Preferred blocking groups are especially firstly phenols or bisphenols. Preferred examples of such phenols and bisphenols are especially phenol, cresol, resorcinol, catechol, 4-Hydroxyanisole (HQMME), cardanol (3-pentadecenylphenol (from cashewnutshell oil)), nonylphenol, phenols that have been reacted with styrene or dicyclopentadiene, bisphenol A, bisphenol F and 2,2'-diallylbisphenol A.

The terminally blocked polyurethane prepolymer is prepared from a linear or branched polyurethane prepolymer terminated by isocyanate groups with one or more isocyanate-reactive compounds. If two or more such isocyanate-reactive compounds are used, the reaction can be effected sequentially or with a mixture of these compounds.

The reaction is preferably effected in such a way that the one or more isocyanate-reactive compounds are used stoichiometrically or in a stoichiometric excess in order to ensure that all NCO groups have been converted.

The polyurethane prepolymer with isocyanate end groups can be prepared from at least one diisocyanate or triisocyanate and from a polymer **Q_{PM}** having terminal amino, thiol or hydroxyl groups and/or from an optionally substituted polyphenol **Q_{PP}**, preferably polymer **Q_{PM}** having terminal amino, thiol or hydroxyl groups.

Suitable diisocyanates are aliphatic, cycloaliphatic, aromatic or araliphatic diisocyanates, especially commercial products such as methylene diphenyl diisocyanate (MDI), hexamethylene diisocyanate (HDI), toluene diisocyanate (TDI), toluidine diisocyanate (TODI), isophorone diisocyanate (IPDI), trimethylhexamethylene diisocyanate (TMDI), 2,5- or 2,6-bis(isocyanatomethyl)bicyclo[2.2.1]heptane, naphthalene 1,5-diisocyanate (NDI), dicyclohexylmethyl diisocyanate (H₁₂MDI), p-phenylene diisocyanate (PPDI), m-tetramethylxylylene diisocyanate (TMXDI), etc. and dimers thereof. Preference is given to HDI, IPDI, MDI or TDI.

Suitable triisocyanates are trimers or biurets of aliphatic, cycloaliphatic, aromatic or araliphatic diisocyanates, especially the isocyanurates and biurets of the diisocyanates described in the previous paragraph. It is of course also possible to use suitable mixtures of di- or triisocyanates.

Especially suitable polymers **Q_{PM}** having terminal amino, thiol or hydroxyl groups are polymers **Q_{PM}** having two or three terminal amino, thiol or hydroxyl groups.

The polymers **Q_{PM}** advantageously have an equivalent weight of 300-6000, especially of 600-4000, preferably of 700-2200, g/equivalent of NCO-reactive groups.

Preferred polymers **Q_{PM}** are polyols having average molecular weights between 600 and 6000 daltons, selected from the group consisting of polyethylene glycols, polypropylene glycols, polyethylene glycol-polypropylene glycol block polymers, polybutylene glycols, hydroxyl-terminated polybutadienes, hydroxyl-terminated butadiene-acrylonitrile copolymers and mixtures thereof.

Especially preferred polymers **Q_{PM}** are α-ω-dihydroxy polyalkylene glycols having C₂-C₆-alkylene groups or having mixed C₂-C₆-alkylene groups, terminated by amino, thiol or, preferably, hydroxyl groups. Particular preference is given to polypropylene glycols or polybutylene glycols. Particular preference is further given to hydroxyl group-terminated polyoxybutylenes.

Especially suitable polyphenols **Q_{PP}** are bis-, tris- and tetraphenols. This is understood to mean not just straight phenols but optionally also substituted phenols. The nature of the substitution may be very varied. More particularly, this is understood to mean substitution directly on the aromatic ring to which the phenolic OH group is bonded. Phenols are additionally understood to mean not just monocyclic aromatics but also polycyclic or fused aromatics or heteroaromatics that have the phenolic OH group directly on the aromatic or heteroaromatic system.

In a preferred embodiment, the polyurethane prepolymer is prepared from at least one diisocyanate or triisocyanate and from a polymer **Q_{PM}** having terminal amino, thiol or hydroxyl groups. The polyurethane prepolymer is prepared in a manner known to the person skilled in the art of polyurethane, especially by using the diisocyanate or triisocyanate in a stoichiometric excess in relation to the amino, thiol or hydroxyl groups of the polymer **Q_{PM}**.

The polyurethane prepolymer having isocyanate end groups preferably has elastic character. It preferably exhibits a glass transition temperature Tg of less than 0°C.

The toughness improver D may be a liquid rubber **D2.** This may be, for example, a carboxy- or epoxy-terminated polymer.

In a first embodiment, this liquid rubber may be a carboxy- or epoxy-terminated acrylonitrile/butadiene copolymer or derivative thereof. Such liquid rubbers are commercially available, for example, under the Hypro / Hypox^{®} CTBN and CTBNX and ETBN name from Emerald Performance Materials. Suitable derivatives are especially elastomer-modified prepolymers having epoxy groups, as sold commercially under the Polydis^{®} product line, especially from the Polydis^{®} 36. product line, by Struktol^{®} (Schill+Seilacher Gruppe, Germany) or under the Albipox product line (Evonik, Germany).

In a second embodiment, this liquid rubber may be a polyacrylate liquid rubber which is fully miscible with liquid epoxy resins and separates to form microdroplets only in the course of curing of the epoxy resin matrix. Such polyacrylate liquid rubbers are available, for example, under the 20208-XPA name from Dow.

It is of course also possible to use mixtures of liquid rubbers, especially mixtures of carboxy- or epoxy-terminated acrylonitrile/butadiene copolymers or derivatives thereof.

Preferably, the proportion of toughness improver **D,** especially of terminally blocked polyurethane polymer **D1.**

Preferably, the amount of the toughness improver **D** is 10 - 40% by weight, especially 15 - 30 % by weight, preferably 20 - 25% by weight, based on the total weight of the thermosetting one-component epoxy resin composition.

It is preferable if the weight ratio of the sum of the at least one liquid epoxy resin **A1** and the at least one liquid epoxy resin **E** to the at least one toughness improver **D ((A1+E)/D)** is from 0.8 - 9.0, preferably 1.1 - 4.5, more preferably 1.5 - 3.5. Said ratio is particularly advantageous with respect to high mechanical property values, especially lap shear strength and impact peel in combination with a high E-modulus.

In a further preferred if the thermosetting one-component epoxy resin composition additionally comprises at least one filler **F.** Preference is given here to mica, talc, kaolin, wollastonite, feldspar, titanium oxide, syenite, chlorite, bentonite, montmorillonite, calcium carbonate (precipitated or ground), dolomite, quartz, silicas (fused or precipitated), cristobalite, calcium oxide, aluminum hydroxide, magnesium oxide, hollow ceramic beads, hollow glass beads, hollow organic beads, glass beads, color pigments. Particular preference is given to fillers selected from the group consisting of calcium carbonate, calcium oxide, wollastonite, titanium oxide, and fumed silicas.

Advantageously, the total proportion of the overall filler **F** is 5 - 35 % by weight preferably 15 - 25 % by weight, more preferably 17.5 -22.5% by weight, based on the total weight of the thermosetting one-component epoxy resin composition.

In a further preferred embodiment, the composition additionally comprises at least one epoxy-bearing reactive diluent **G.** Such reactive diluents are known to the person skilled in the art. Preferred examples of epoxy-bearing reactive diluents are:
- glycidyl ethers of monofunctional, saturated or unsaturated, branched or unbranched, cyclic or open-chain, C₄-C₃₀ alcohols, e.g. butanol glycidyl ether, hexanol glycidyl ether, 2-ethylhexanol glycidyl ether, allyl glycidyl ether, tetrahydrofurfuryl and furfuryl glycidyl ether, trimethoxysilyl glycidyl ether, and the like;
- glycidyl ethers of tri- or more than trifunctional, saturated or unsaturated, branched or unbranched, cyclic or open-chain, alcohols, such as epoxidized castor oil, epoxidized trimethylolpropane, epoxidized pentaerythritol or polyglycidyl ethers of aliphatic polyols, such as sorbitol, glycerol, trimethylolpropane, and the like;
- glycidyl ethers of phenol compounds and aniline compounds, such as phenyl glycidyl ether, cresyl glycidyl ether, p-tert-butylphenyl glycidyl ether, nonylphenol glycidyl ether, 3-n-pentadecenyl glycidyl ether (from cashewnutshell oil), N,N-diglycidylaniline, and the like;

- epoxidized amines, such as N,N-diglycidylcyclohexylamine, and the like;
- epoxidized mono- or dicarboxylic acids, such as glycidyl neodecanoate, glycidyl methacrylate, glycidyl benzoate, diglycidyl phthalate, tetrahydrophthalate and hexahydrophthalate, diglycidyl esters of dimeric fatty acids, and the like;
- epoxidized di- or trifunctional, low to high molecular weight polyether polyols, such as polyethylene glycol diglycidyl ether, polypropylene glycol diglycidyl ether, and the like.

Particular preference is given to p-tert-butylphenyl glycidyl ether.

Advantageously, the total proportion of the epoxy-bearing reactive diluent **G** is 0.1-5% by weight, preferably 0.1-2% by weight, especially preferably 0.1-1% by weight, more preferably 0.2-0.7% by weight, based on the total weight of the thermosetting one-component epoxy resin composition.

The composition may include further constituents, especially catalysts, stabilizers, especially heat and/or light stabilizers, thixotropic agents, plasticizers, solvents, mineral or organic fillers, blowing agents, dyes and pigments, anticorrosives, surfactants, defoamers and adhesion promoters.

Suitable plasticizers are especially phenol alkylsulfonates or N-butylbenzamide, as commercially available as Mesamoll^{®} or Dellatol BBS from Bayer.

Suitable stabilizers are especially optionally substituted phenols such as BHT or Wingstay^{®} T (Elkem), sterically hindered amines or N-oxyl compounds such as TEMPO (Evonik).

It is advantageous when the epoxy resin composition of the invention has a viscosity at 23°C of 300 - 1300 Pa*s, especially 500 - 1200 Pa*s, preferably 700 - 1100 Pa*s, more preferably 800 - 1050 Pa*s, especially measured with a rheometer in oscillation using a plate-plate geometry with the following parameters: 5 Hz, measurement gap 1 mm, plate-plate diameter 25 mm, 1% deformation. This is advantageous in that this assures good applicability.

It has been found that the thermosetting one-component epoxy resin compositions described are particularly suitable for use as one-component thermosetting adhesives, especially as a thermosetting one-component bodywork adhesive in motor vehicle construction. Such a one-component adhesive has a range of possible uses. Such adhesives are required for the bonding of heat-stable materials. Heat-stable materials are understood to mean materials which are dimensionally stable at a curing temperature of 100 - 220°C, preferably 120 - 200°C, at least during the curing time. In particular, these are metals and plastics, such as ABS, polyamide, polyphenylene ether, composite materials, such as SMC, unsaturated polyesters GFP, epoxy or acrylate composite materials. Preference is given to the use in which at least one material is a metal. A particularly preferred use is considered to be the bonding of identical or different metals, especially in bodywork construction in the automobile industry. The preferred metals are in particular steel, especially electrolytically galvanized, hot-dip-galvanized or oiled steel, Bonazinc-coated steel, and post-phosphated steel, and also aluminum, especially in the variants which typically occur in automobile construction.

A further aspect of the present invention relates to a process for the bonding of heat-stable substrates, which comprises the stages:
i) applying a thermosetting one-component epoxy resin composition as described in detail above to the surface of a heat-stable substrate **S1,** especially of a metal;
ii) contacting the thermosetting one-component epoxy resin composition applied with the surface of a further heat-stable substrate **S2,** especially of a metal;
iii) heating the composition to a temperature of 100-220°C, especially of 120-200°C, preferably between 130 and 150°C, more preferably between 130 and 140°C.

The substrate **S2** consists here of the same material as or a different material from the substrate **S1.** The substrates **S1** and/or **S2** are in particular the aforementioned metals and plastics.

Preferably, in step iii), the composition is heated to a temperature of 100-220°C, especially of 120-200°C, preferably between 130 and 150°C, more preferably between 130 and 140°C, and the composition is left at the aforementioned temperature for 10 min - 6 h, 10 min - 2 h, 10 min - 60 min, 10 min - 30 min, 10 min - 20 min, more preferably 10 min - 15 min.

Such a method of bonding heat-stable materials results in an adhesive-bonded article. Such an article is preferably a vehicle or part of a vehicle.

A further aspect of the present invention accordingly relates to an adhesive-bonded article obtained from the abovementioned process. Furthermore, the compositions according to the invention are suitable not only for automobile construction but also for other fields of use. Particular mention should be made of related applications in the construction of transportation means, such as ships, trucks, buses or rail vehicles, or in the construction of consumer goods, such as, for example, washing machines.

The materials adhesive-bonded by means of a composition according to the invention are used at temperatures between typically 120°C and -40°C, preferably between 100°C and -40°C, in particular between 80°C and -40°C.

A particularly preferred use of the thermosetting one-component epoxy resin composition of the invention is the use thereof as a thermosetting one-component bodywork adhesive in motor vehicle construction or as a stiffening compound or as a foamable, thermosetting composition for the reinforcement of voids in structural components and reinforcing elements.

A further aspect of the present invention relates to a cured epoxy resin composition as obtained by heating a thermosetting one-component epoxy resin composition as described in detail above.

More preferably, the compositions of the invention have the following properties:
- E-Modulus @ 10' 140 °C, measured as described in the experimental section, of 1200 - 2200 MPa, especially 1400 - 1800 MPa;
- LSS @ 10' 140 °C, measured as described in the experimental section, of > 20 MPa, especially ≥ 22 MPa, especially ≥ 23 MPa;
- IP @ 10' 140 °C, measured as described in the experimental section, of ≥ 30 N/mm, especially ≥ 35 N/mm.

It is further preferred that the compositions of the invention have a viscosity increase in percent, measured as described in the experimental section for "Viscosity increase" of less than 100 %, preferably less than 75 %, more preferably less than 50 %.

It is further preferred that the compositions of the invention have a decrease in lap shear strength in percent, measured as described in the experimental section for "Corrossion decrease" of less than 100 %, preferably less than 50 %, more preferably less than 30 %.

It is further preferred that the compositions of the invention have a tensile shear decrease in percent, measured as described in the experimental section for "Loss OT" of less than 100 %, preferably less than 50 %, more preferably less than 30 %.

### Examples

Some examples which further illustrate the invention, but which are not intended to restrict the scope of the invention in any way, are cited below.

### Preparation of a toughness improver ("D1")

150 g of poly-THF 2000 (OH number 57 mg/g KOH) and 150 of Liquiflex H (OH number 46 mg/g KOH) were dried under vacuum at 105°C for 30 minutes. Once the temperature had been reduced to 90°C, 61.5 g of IPDI and 0.14 g of dibutyltin dilaurate were added. The reaction was carried out under vacuum at 90°C until the NCO content was constant at 3.10% after 2.0 h (calculated NCO content: 3.15%). Subsequently, 96.1 g of cardanol were added as blocking agent. Stirring was continued at 105°C under vacuum until it was no longer possible to detect any free NCO. The product was used as such as toughness improver ***D1*.**

| | |
|---|---|
| A1 | Liquid aromatic epoxy resin, D.E.R. 331 (bisphenol A diglycidyl ether), DOW |
| A2 | Solid epoxy resin (bisphenol A diglycidyl ether-based), Dow |
| R7 | Tert-Butylphenyl-glycidylether, Polypox R7, reactive diluent |
| E1 | Heloxy Modifier BD, diglycidyl ether of 1,4-butanediol, epoxy equivalent 124 - 137, Westlake Epoxy |
| E2 | Heloxy Modifier HD, diglycidyl ether of 1,6-hexanediol, epoxy equivalent 135 - 155, Westlake Epoxy |
| E3 | Heloxy Modifier WF, polybutoxy diglycidyl ether, Westlake Epoxy |
| Flex | Flexibilizer DY 965, liquid phenol terminated polyurethane adduct mixture containing 10-20 wt.-% of 2,2-Bis-(3-allyl-4-hydroxyphenyl)-propane, Huntsman |
| Epilox | Epilox 19-34/700, Reaction mass of 2,2'-[methylenebis(4,1-phenyleneoxymethylene)]dioxirane and [2-({2-[4-(oxiran-2 ylmethoxy)benzyl]phenoxy}methyl)oxirane and [2,2'-[methylenebis(2,1-phenyleneoxymethylene)]dioxirane, Leuna Harze |
| B2 | Adipic dihydrazide (ADH), CAS: 1071-93-8, Otsuka ADH/S (median particle size D50 of 4-15 µm), Otsuka Chemical Co., Mw: 174.20 g/mol |
| C1 | N,N-dimethylurea, Mw: 88.11 g/mol, Sigma Aldrich |
| C2 | Basionics LQ 01, 1-Ethyl-3-methylimidazolium ethyl sulfate, BASF, Mw: 236.29 g/mol |
| F1 | Pyrogenic silica |
| F2 | Calcium oxide |
| F3 | Corrosion protection particles (aluminum phosphate) |
| F4 | Wollastonite |
| | Poly-THF 2000 (difunctional polybutylene glycol) (OH equivalent weight = about 1000 g/OH equivalent), BASF |
| | PolyBD R45V (hydroxyl-terminated polybutadiene) (OH equivalent weight = about 1230 g/OH equivalent), Cray Valley |
| | Isophorone diisocyanate (= *"IPDI"*)*,* Evonik |

Raw materials used.

### Production of the compositions

The reference compositions Ref1-Ref7 and the inventive compositions E1 to E22 were produced according to the compositions in table 1, 3, 5 and 7, wherein the stated amounts are in parts by weight. The ratio of the proportion of the sum of the epoxy groups of the liquid epoxy resins **A1** and **E** and the optional solid epoxy resin **A2** in mol / proportion of curing agent **B** in mol **((A1+A2+E)/B)** is 4. The ratio of the proportion of accelerator **C** in grams per mole of the sum of the epoxy groups of the epoxy resins **A1** and **E** and the solid epoxy resin **A2** is 0.3 g/mol in the case of C1 and 2.16 g/mol in the case of C2.

### Test methods:

### Modulus of elasticity (E-Modulus) (DIN EN ISO 527)

These mechanical properties were determined by using dumbbell-shaped bars (specimen type 5A of DIN EN ISO 527) having a thickness of 2 mm and a length of 750 mm. After curing at 140 °C for 10 minutes, 180 °C for 30 minutes respectively, the test specimens were measured under standard conditions at a pulling speed 2 mm/min. The modulus of elasticity was determined according to DIN EN ISO 527. Thereby the modulus of elasticity (E-Modulus) was determined in the elongation range of 0.05%-0.25%.

### Lap shear strength (LSS) (DIN EN 1465)

Cleaned test specimens of Elo H420 steel (thickness 1.5 mm) that had been reoiled with Anticorit PL 3802-39S were bonded with the adhesive over a bonding area of 25 x 10 mm with glass beads as spacer in a layer thickness of 0.3 mm and cured at oven temperature (object temperature) as indicted in table 2, table 4 and table 6.

For the measurements of 10 weeks VDA: The cured samples, build up as described above, were sprayed with a filling primer for corrosion protection of the metal substrates and then stored in a changing climate according to VDA 624-415. One test cycle lasts 7 days and consists of: 24h-test at 35 °C with a salt spray solution of 5% NaCl, 4 days of humid/dry climate (8h, 40 °C, 98% r.H. / 16h, 23 °C, 50% r.H) and 2 days at 23°C and 50% r.H.

For the measurements of 8 weeks OT: The samples were built up and stored for 8 weeks at 23 °C 80% r.H. before curing. After this exposure the samples were cured for 30 min at 180 °C.

Lap shear strength was determined on a tensile tester at a strain rate of 10 mm/min in a triple determination to DIN EN 1465.

### impact peel strength (IP) (to ISO 11343)

The specimens were produced with the adhesive and DC04+ZE steel with dimensions of 90 x 20 x 0.8 mm. The bonding area here was 20 x 30 mm at a layer thickness of 0.3 mm with glass beads as spacer. The samples were cured under the following conditions:
"10' 140 °C": 140°C for 10 min object temperature
"15' 140 °C": 140°C for 15 min object temperature
"30' 180 °C": 180°C for 30 min object temperature

The impact peel strength was measured at 23°C as a triple determination on a Zwick 450 impact pendulum. The impact peel strength reported is the average force in N/mm under the measurement curve from 25% to 90% to ISO11343.

### Viscosity/storage stability of compositions

Viscosity measurements of the compositions were affected 1 d after production on an Anton Paar MCR 101 rheometer by oscillation using a plate-plate geometry at a temperature of 25°C with the following parameters: 10 Hz, measurement gap 1 mm, plate-plate diameter 25 mm, 0.01-10% deformation, determination of A4 complex viscosity h* determined at 10% deformation. The measurement is displayed in table 2, table 4 and table 6 under "Initial Viscosity".

For assessment of the storage stability of the adhesives, the viscosity measurement was repeated after storage at the specified temperature for a specified time in weeks (w) and the percentage rise in viscosity that results after the storage was ascertained. The measured viscosity in Pa*s measured at a temperature of 23°C after storage for 1 week at 50°C is displayed as "Viscosity after 1w 50 °C". The value displayed as "Viscosity increase" shows the percentage rise in viscosity.

### Lap shear strength after corrosion condition testing ("Corrosion decrease")

The samples were cured for 40 minutes at 180 °C (tensile shear samples, substrate: H420 1.2 mm, adhesive layer thickness 0.3 mm) and then sprayed with a corrosion protection spray. The samples were then stored for 10 weeks (10 cycles) according to VDA 624-415. The lap shear strength was then tested and the drop in initial lap shear strength was calculated (percentage drop).

### Open time decrease ("OT decrease")

Tensile shear samples (substrate: H420 1.2 mm, adhesive layer thickness 0.3 mm) were constructed and then left uncured for 8 weeks at 23 °C 80% relative humidity outsourced. The samples were then cured for 40 minutes at 180 °C and the drop to the initial value was noted.

**Table 1, n.d. = not determined**

| | **Ref1** | **Ref2** | **E1** | **Ref3** | **Ref4** | **E2** | **Ref5** | **Ref6** |
|---|---|---|---|---|---|---|---|---|
| A1 | 44.5 | 40.2 | 36.2 | 30.9 | 40.2 | 36.2 | 30.9 | 30.9 |
| A2 | 1 | 1 | 1 | 1 | 1 | 1 | 1 | 1 |
| R7 | 0.5 | 0.5 | 0.5 | 0.5 | 0.5 | 0.5 | 0.5 | 0.5 |
| E1 | - | 4.18 | 8.2 | 13.5 | - | - | - | - |
| E2 | - | - | - | - | 4.18 | 8.2 | 13.5 | - |
| E3 | - | - | - | - | - | - | - | 13.5 |
| D1 | 22.7 | 22.7 | 22.7 | 22.7 | 22.7 | 22.7 | 22.7 | 22.7 |
| B2 | 10.5 | 10.5 | 10.5 | 10.5 | 10.5 | 10.5 | 10.5 | 10.5 |
| C1 | 0.07 | 0.07 | 0.07 | 0.07 | 0.07 | 0.07 | 0.07 | 0.07 |
| F1 | 7.8 | 7.8 | 7.8 | 7.8 | 7.8 | 7.8 | 7.8 | 7.8 |
| F2 | 4.7 | 4.7 | 4.7 | 4.7 | 4.7 | 4.7 | 4.7 | 4.7 |
| F3 | 3.1 | 3.1 | 3.1 | 3.1 | 3.1 | 3.1 | 3.1 | 3.1 |
| F4 | 5.2 | 5.2 | 5.2 | 5.2 | 5.2 | 5.2 | 5.2 | 5.2 |
| **Total (wt.-%):** | 100 | 100 | 100 | 100 | 100 | 100 | 100 | 100 |

**Table 2, n.d. = not determined**

| | **Formulation** | **Ref1** | **Ref2** | **E1** | **Ref3** | **Ref4** | **E2** | **Ref5** | **Ref6** |
|---|---|---|---|---|---|---|---|---|---|
| | **Ratio A1/E** | - | 9.6 | 4.4 | 2.3 | 9.6 | 4.4 | 2.3 | 2.3 |
| **LSS [MPa]** | **10' 140 °C** | 30.1 | 26.7 | 26.5 | 20.7 | 25 | 23.8 | 23.2 | 12.6 |
| | **15' 140 °C** | 32.9 | 30.4 | 29.6 | 27.9 | 31 | 30.1 | 26.9 | 17.9 |
| | **30' 180 °C** | 33 | 32.4 | 31.1 | 31.6 | 31.4 | 29.8 | 27.6 | 19.1 |
| | **10 weeks VDA** | 22.8 | n.d. | 22.8 | n.d. | n.d. | 22.2 | n.d. | n.d. |
| | **8 weeks OT** | 21.7 | n.d. | 23.1 | n.d. | n.d. | 25.4 | n.d. | n.d. |
| **IP [N/mm]** | **10' 140 °C** | 33.99 | 35.77 | 37.02 | 36.74 | 35.35 | 36.9 | 38.97 | 30.08 |
| | **15' 140 °C** | 31.78 | 34.05 | 35 | 35.89 | 33.88 | 34.91 | 36.33 | 29.66 |
| | **30' 180 °C** | 27.03 | 28.51 | 30.38 | 32.15 | 26.19 | 25.89 | 32.12 | 21.47 |
| **E-Modulus [MPa]** | **Modulus @ 10' 140 °C** | 1940 | 1490 | 1530 | 1700 | 1860 | 1580 | 1230 | 48.2 |
| | **Modulus @ 30' 180 °C** | 1720 | 1490 | 1300 | 1410 | 1540 | 1600 | 1490 | 443 |
| | **Initial Viscosity [Pa*s]** | 1595 | 1260 | 1020 | 667 | 1010 | 980 | 732 | 940 |
| | **Viscosity after lw 50 °C [Pa*s]** | 1840 | 1420 | 1230 | 834 | 1560 | 1370 | 1090 | 1480 |
| | **Viscosity increase [%]** | 15.36 | 12.70 | 20.59 | 25.04 | 54.46 | 39.80 | 48.91 | 57.45 |
| | **Corrossion decrease [%]** | 31 | 100 | 27 | 100 | 100 | 26 | 100 | 100 |
| | **OT decrease [%]** | 34 | 100 | 26 | 100 | 100 | 15 | 100 | 100 |

**Table 3**

| | **Ref7** | **E3** | **Ref8** | **E4** | **Ref9** |
|---|---|---|---|---|---|
| A1 | 44 | 35.7 | 23.7 | 35.8 | 23.4 |
| A2 | 1 | 1 | 1 | 1 | 1 |
| R7 | 0.5 | 0.5 | 0.5 | 0.5 | 0.5 |
| E1 | - | 8.2 | 20.2 | | |
| E2 | - | | | 8.2 | 20.6 |
| D1 | 22.7 | 22.7 | 22.7 | 22.7 | 22.7 |
| B2 | 10.5 | 10.5 | 10.5 | 10.5 | 10.5 |
| C2 | 0.5 | 0.57 | 0.6 | 0.54 | 0.57 |
| F1 | 7.8 | 7.8 | 7.8 | 7.8 | 7.8 |
| F2 | 4.7 | 4.7 | 4.7 | 4.7 | 4.7 |
| F3 | 3.1 | 3.1 | 3.1 | 3.1 | 3.1 |
| F4 | 5.2 | 5.2 | 5.2 | 5.2 | 5.2 |
| **Total (wt.-%):** | 100 | 100 | 100 | 100 | 100 |

**Table 4, n.d. = not determined**

| | | **Ref7** | **E3** | **Ref8** | **E4** | **Ref9** |
|---|---|---|---|---|---|---|
| **LSS [MPa]** | **10' 140 °C** | 27.9 | 28.4 | 24.3 | 27.2 | 23.7 |
| | **15' 140 °C** | 31 | 29.4 | 25.9 | 28.7 | 26 |
| | **30' 180 °C** | 31.7 | 31 | 25 | 29.4 | 24.7 |
| | **after 10 weeks VDA** | 23.9 | 19.8 | 15.2 | 20.3 | 11.7 |
| | **after 8 weeks OT** | 26.5 | 23.1 | 13.8 | 20.5 | 14.5 |
| **IP [N/mm]** | **10' 140 °C** | 34.42 | 33.87 | 31.66 | 34.04 | 37.26 |
| | **15' 140 °C** | 31.49 | 34.32 | 36.75 | 34.78 | 37.84 |
| | **30' 180 °C** | 26.01 | 28.06 | 33.11 | 26.92 | 33.01 |
| **E-Modulus [MPa]** | **Modulus @ 10' 140 °C** | 1900 | 1420 | 1260 | 1740 | 1150 |
| | **Modulus @ 30' 180 °C** | n.d. | 1580 | 1450 | 1550 | 1230 |
| | **Initial Viscosity [Pa*s]** | 1516 | 889 | 663 | 830 | 604 |
| | **Viscosity after lw 50 °C [Pa*s]** | 1726 | 1310 | cured | 1680 | cured |
| | **Viscosity increase [%]** | 13.85 | 47.36 | 100 | 100 | 100 |
| | **Loss VDA [%]** | 25 | 36 | 39 | 31 | 53 |
| | **Loss OT [%]** | 16 | 25 | 45 | 30 | 41 |

**Table 5**

| | **Ref1** | **Ref10** | **Ref11** | **Ref12** | **Ref13** | **Ref14** | **Ref15** | **Ref16** | **Ref17** |
|---|---|---|---|---|---|---|---|---|---|
| A1 | 44.5 | 40.3 | 30.4 | 22.6 | 40.2 | 31.9 | 23.3 | 40.9 | 36.8 |
| A2 | 1 | 1 | 1 | 1 | 1 | 1 | 1 | 1 | 1 |
| R7 | 0.5 | 0.5 | 0.5 | 0.5 | 0.5 | 0.5 | 0.5 | 4.1 | 8.2 |
| Flex | - | 4.18 | 14.1 | 21.8 | - | - | - | - | - |
| Epilox | - | - | - | - | 4.18 | 12.6 | 21.2 | - | - |
| D1 | 22.7 | 22.7 | 22.7 | 22.7 | 22.7 | 22.7 | 22.7 | 22.7 | 22.7 |
| B2 | 10.5 | 10.5 | 10.5 | 10.5 | 10.5 | 10.5 | 10.5 | 10.5 | 10.5 |
| C1 | 0.07 | 0.07 | 0.07 | 0.07 | 0.07 | 0.07 | 0.07 | 0.07 | 0.07 |
| F1 | 7.8 | 7.8 | 7.8 | 7.8 | 7.8 | 7.8 | 7.8 | 7.8 | 7.8 |
| F2 | 4.7 | 4.7 | 4.7 | 4.7 | 4.7 | 4.7 | 4.7 | 4.7 | 4.7 |
| F3 | 3.1 | 3.1 | 3.1 | 3.1 | 3.1 | 3.1 | 3.1 | 3.1 | 3.1 |
| F4 | 5.2 | 5.2 | 5.2 | 5.2 | 5.2 | 5.2 | 5.2 | 5.2 | 5.2 |
| **Total (wt.-%):** | 100 | 100 | 100 | 100 | 100 | 100 | 100 | 100 | 100 |

**Table 6, n.d. = not determined**

| | **Formulation** | **Ref1** | **Ref10** | | **Ref11** | **Ref12** | **Ref13** | **Ref14** | **Ref15** | **Ref16** | **Ref17** |
|---|---|---|---|---|---|---|---|---|---|---|---|
| **LSS [MPa]** | **10' 140 °C** | 30.1 | 24.7 | | 9.91 | 0.67 | 24.7 | 18.4 | 12.1 | 20.8 | 17.5 |
| | **15' 140 °C** | 32.9 | 27.7 | | 15.2 | 3.74 | n.d. | n.d. | n.d. | n.d. | n.d. |
| | **30' 180 °C** | 33 | 27.3 | | 17.6 | 11.5 | 29.7 | 26.4 | 16.4 | 31.9 | 31.9 |
| **IP [N/mm]** | **10' 140 °C** | 33.99 | 36.97 | | 27.86 | 9.02 | 34.52 | 35.62 | 35.81 | 32.42 | 29.51 |
| | **15' 140 °C** | 31.78 | 35.24 | | 34.3 | 19.3 | n.d. | n.d. | n.d. | n.d. | n.d. |
| | **30' 180 °C** | 27.03 | 24.16 | | 32.14 | 34.57 | 29.29 | 27.51 | 31.51 | 27.67 | 28.21 |
| **E-Modulus [MPa]** | **Modulus @ 10' 140 °C** | 1940 | 1330 | | 183 | 12.3 | 1690 | 619 | 79.8 | 1380 | 899 |
| | **Modulus @ 30' 180 °C** | 1720 | 1100 | | 205 | 62.7 | 1540 | 989 | 122 | 1460 | 1410 |
| | **Initial Viscosity [Pa*s]** | 1595 | 1970 | | 2590 | 3240 | 1180 | n.d. | 3830 | 1134 | 1110 |
| | **Viscosity after 1w 50 °C [Pa*s]** | 1840 | 2140 | | 2840 | 3540 | 1360 | 1150 | cured | 1330 | 1370 |
| | **Viscosity increase [%]** | 15 | 9 | | 10 | 9 | 15 | n.d. | 100 | 17 | 23 |

## Claims

1. A thermosetting one-component epoxy resin composition comprising
a) 10 - 60 % by weight, preferably 20 - 50 % by weight, more preferably 25 - 35 % by weight, based on the total weight of the thermosetting one-component epoxy resin composition, of at least one liquid epoxy resin **A1** having an average of more than one epoxy group per molecule;
b) 0 - 10 % by weight, preferably 0 - 5 % by weight, more preferably 0 - 2 % by weight, based on the total weight of the thermosetting one-component epoxy resin composition at least one solid epoxy resin **A2** having an average of more than one epoxy group per molecule;
c) at least one liquid epoxy resin **E** having an average of more than one epoxy group per molecule, that is a glycidyl ether of difunctional saturated, branched or unbranched, cyclic or open-chain C₂-C₃₀ alcohols;
d) at least one curing agent **B** for epoxy resins, where the curing agent **B** is a dihydrazide, preferably selected from the group consisting of aromatic dicarboxylic dihydrazide **B1** and aliphatic dicarboxylic dihydrazide **B2;** and
e) preferably at least one at least one toughness improver **D,** preferably selected from the group consisting of terminally blocked polyurethane polymers **D1** and liquid rubbers **D2,** preferably a terminally blocked polyurethane polymer **D1,**
wherein the weight ratio of the at least one liquid epoxy resin **A1** to the at least one liquid epoxy resin **E (A1/E)** is from 3.0 - 8.5 and wherein the at least one liquid epoxy resin **A1** is different from the at least one liquid epoxy resin **E.**

2. The thermosetting one-component epoxy resin composition as claimed in claim 1, **characterized in that** the curing agent **B** is an aliphatic dicarboxylic dihydrazide **B2,** preferably selected from the group consisting of glutaric dihydrazide, adipic dihydrazide, pimelic dihydrazide, 8,12-eicosadienedioic acid 1,20-dihydrazide and 4-isopropyl-2,5-dioxoimidazolidine-1,3-di(propionohydrazide), especially adipic dihydrazide.

3. The thermosetting one-component epoxy resin composition as claimed in any of the preceding claims, **characterized in that** the at least one liquid epoxy resin **A1** has the formula (II) 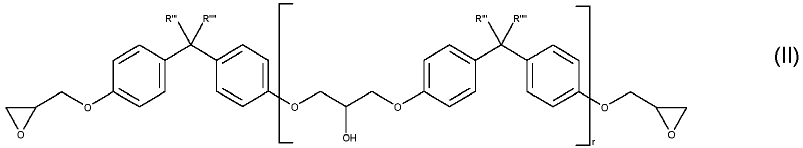 wherein the substituents R‴ and R"" are each independently H or CH₃, the index r has a value of 0 to 1, preferably, r has a value of less than 0.2.

4. The thermosetting one-component epoxy resin composition as claimed in any of the preceding claims, **characterized in that** liquid epoxy resin **E** is selected from the group consisting of butanediol diglycidyl ether, hexanediol diglycidyl ether, octanediol diglycidyl ether, cyclohexane dimethanol diglycidyl ether and neopentyl glycol diglycidyl ether, more preferably butanediol diglycidyl ether and hexanediol diglycidyl ether, most preferably the liquid epoxy resin **E** is hexanediol diglycidyl ether.

5. The thermosetting one-component epoxy resin composition as claimed in any of the preceding claims, **characterized in that** the thermosetting one-component epoxy resin composition additionally includes at least one accelerator **C** selected from the list consisting of substituted ureas, imidazoles, imidazolines and blocked amines, preferably imidazoles and substituted ureas, most preferred substituted ureas.

6. The thermosetting one-component epoxy resin composition as claimed in any of the preceding claims, **characterized in that** the weight ratio of the at least one liquid epoxy resin **A1** to the at least one liquid epoxy resin **E (A1/E)** is from 3.5 - 7.5, more preferably 4.0 - 6.5.

7. The thermosetting one-component epoxy resin composition as claimed in any of the preceding claims, **characterized in that** the weight ratio of the sum of the at least one liquid epoxy resin **A1** and the at least one liquid epoxy resin **E** to the at least one toughness improver **D ((A1+E)/D)** is from 0.8 - 9.0, preferably 1.1 - 4.5, more preferably 1.5 - 3.5.

8. The thermosetting one-component epoxy resin composition as claimed in any of the preceding claims, **characterized in that** the total amount of the at least one liquid epoxy resin **E** is 4.5 - 12.5 % by weight, preferably 6.5 - 10.5 % by weight, more preferably 7.5 - 9.5 % by weight, based on the total weight of the thermosetting one-component epoxy resin composition.

9. The thermosetting one-component epoxy resin composition as claimed in any of the preceding claims, **characterized in that** the thermosetting one-component epoxy resin composition additionally includes at least one filler **F,** preferably selected from the group consisting of calcium carbonate, calcium oxide, wollastonite, titanium oxide, and fumed silicas; preferably the total proportion of the filler **F** is 5 - 35 % by weight preferably 15 - 25 % by weight, more preferably 17.5 -22.5% by weight, based on the total weight of the thermosetting one-component epoxy resin composition.

10. The thermosetting one-component epoxy resin composition as claimed in any of the preceding claims, **characterized in that** the ratio of the proportion of the sum of the epoxy groups of the liquid epoxy resins **A1** and **E** and the optional solid epoxy resin **A2** in mol / proportion of curing agent **B** in mol **((A1+A2+E)/B)** is 2 - 7, preferably 2.5 - 6, more preferably 3-5, most preferably 3.5-4.5.

11. The thermosetting one-component epoxy resin composition as claimed in any of the preceding claims, **characterized in that** the ratio of the proportion of accelerator **C** in grams per mole of the sum of the epoxy groups of the liquid epoxy resins **A1** and **E** and the optional solid epoxy resin **A2** is 0.01-0.8 g/mol of epoxy groups, preferably 0.05-0.6 g/mol of epoxy groups, more preferably 0.075-0.5 g/mol of epoxy groups, most preferably 0.1-0.35 g/mol of epoxy groups.

12. The thermosetting one-component epoxy resin composition as claimed in any of the preceding claims, **characterized in that** the proportion of the sum of the liquid epoxy resins **A1** and **E** is 30 - 60 % by weight, preferably 35 - 55 % by weight, more preferably 40 - 50 % by weight, based on the total weight of the one-component epoxy resin composition.

13. The thermosetting one-component epoxy resin composition as claimed in any of the preceding claims, **characterized in that** the one-component epoxy resin composition has a viscosity at 23°C of 300 - 1300 Pa*s, especially 500 - 1200 Pa*s, preferably 700 - 1100 Pa*s, more preferably 800 - 1050 Pa*s.

14. The use of a thermosetting one-component epoxy resin composition as claimed in any of claims 1 to 13 as one-component thermosetting adhesive, especially as thermosetting one-component bodywork adhesive in motor vehicle construction.

15. A process for the adhesive bonding of heat-stable substrates, comprising the stages of:
i) applying a thermosetting one-component epoxy resin composition as claimed in any of claims 1 to 13 to the surface of a heat-stable substrate **S1,** especially of a metal;
ii) contacting the thermosetting one-component epoxy resin composition applied with the surface of a further heat-stable substrate **S2,** especially of a metal;
iii) heating the composition to a temperature of 100-220°C, especially of 120-200°C, preferably between 130 and 150°C, more preferably between 130 and 140°C;
in which the substrate **S2** consists of the same material as or a different material from the substrate **S1.**

16. The process as claimed in claim 15, wherein, in step iii) of heating the composition to a temperature of 100-220°C, especially of 120-200°C, preferably between 130 and 150°C, more preferably between 130 and 140°C, the composition is left at the aforementioned temperature for 10 min - 6 h, 10 min - 2 h, 10 min - 60 min, 10 min - 30 min, 10 min - 20 min, more preferably 10 min - 15 min.
